# EUROPÄISCHE PATENTSCHRIFT

(11) **EP 4 469 756 B1**
(45) Veröffentlichungstag und Bekanntmachung des Hinweises auf die Patenterteilung: **15.07.2026**
(21) Anmeldenummer: 23701367.7
(22) Anmeldetag: 19.01.2023
(51) Int. Cl.: G01D 5/347, G01P 1/02, G01P 3/487, H02K 35/02

(54) **DREHGEBER MIT EINEM GENERATOR**
ROTARY ENCODER WITH A GENERATOR
CAPTEUR ROTATIF DOTÉ D'UN GÉNÉRATEUR

(30) Priorität: 28.01.2022 DE 102022000344
(43) Veröffentlichungstag der Anmeldung: 04.12.2024
(73) Patentinhaber: Baumer Germany GmbH & Co. KG, 78333 Stockach (DE)
(72) Erfinder: OTTO, Kai-Hans, 12526 Berlin (DE); LABLACK, Edgar, 12163 Berlin (DE); REINAUER, Torsten, 78465 Konstanz (DE); STEUER, Christian, 14612 Falkensee (DE)
(74) Vertreter: Strauss, Steffen
(86) Internationale Anmeldenummer: PCT/EP2023/051168
(87) Internationale Veröffentlichungsnummer: WO 2023/143989

(56) Entgegenhaltungen:
- EP-B1- 1 687 592
- DE-B3- 102015 114 384
- US-A1- 2010 253 327
- US-B1- 6 249 118

## Beschreibung

Die Erfindung betrifft einen Drehgeber mit einem Generator zum Erfassen von Informationen einer rotierenden Welle.

Herkömmliche Drehgeber dienen dazu, Messgrößen wie Winkelstellung, Drehzahl, Drehrichtung und/oder Winkelbeschleunigung einer rotierenden Welle eines Antriebes zu erfassen und an eine Steuerung zum Steuern bzw. Regeln des Antriebes zu übermitteln. Hierbei können die Drehgeber auch dazu genutzt werden, die erfassten Messgrößen zwischenzuspeichern und über eine statistische Auswertung eine Zustandsüberwachung durchzuführen. In der Regel werden die erfassten Messgrößen als elektrisch codierte Signale an die Steuerung übermittelt, wozu in der Regel eine Energieversorgung des Drehgebers erforderlich ist.

Aus der EP1687592 ist ein Drehgeber mit einem Generator zur autarken Energieversorgung des Drehgebers bekannt.

Die US 6 249 118 B1 offenbart einen als "sensor" bezeichneten Drehgeber, der einen Magneten mit einem stabförmigen Polstück umfasst. Der Magnet und das Polstück können als Einheit entgegen der Federkraft einer Feder relativ zu einer stationären Spule bewegt werden, um eine Spannung in der Spule zu induzieren und somit die Position zu bestimmen.

Die US 2010/253327 A1 beschreibt einen als "apparatus" benannten Geber und ein Verfahren zum Ermitteln der Relativposition eines bewegbaren Elements entlang eines vorbestimmten Verstellweges.

Es ist eine Aufgabe der vorliegenden Erfindung, die aus dem Stand der Technik bekannten Nachteile zu überwinden. Insbesondere ist es die Aufgabe der vorliegenden Erfindung den aus der EP1687592 bekannten Generator und Drehgeber vorteilhaft weiterzubilden.

Gemäß einem ersten Aspekt wird diese Aufgabe durch einen von einem Drehgeber umfassten Generator gelöst, wobei der Generator einen Trägerkörper, eine Spule, die um einen Abschnitt des Trägerkörpers gewickelt ist, sowie ein Federelement umfasst, welches ausgebildet ist, in Reaktion auf ein sich zeitlich veränderndes Magnetfeld eine Hin- und Herbewegung durchzuführen und eine Spannung in der Spule zu induzieren. Der Generator umfasst ferner ein erstes Kontaktelement und ein zweites Kontaktelement, welche ausgebildet und angeordnet sind, die Spule in einer vertikalen Ausrichtung und einer horizontalen Ausrichtung des Trägerkörpers elektrisch und/oder elektronisch mit weiteren Komponenten des Drehgebers zu verbinden.

Mit anderen Worten ist es im Rahmen der vorliegenden Erfindung vorgesehen, einen Generator für einen Drehgeber anzugeben. Der erfindungsgemäße Generator umfasst einen Trägerkörper sowie eine um einen Abschnitt des Trägerkörpers gewickelte Spule. Ferner umfasst der erfindungsgemäße Generator ein Federelement, das so ausgebildet ist, dass es in Reaktion auf ein sich zeitlich veränderndes Magnetfeld eine Hin- und Herbewegung ausführt und in Folge von dieser Bewegung eine Spannung in der Spule induzierbar ist.

Weiterhin umfasst der Generator ein erstes Kontaktelement und ein zweites Kontaktelement, die so ausgebildet sind, dass die Spule entweder in einer vertikalen Ausrichtung bei einer vertikalen Montagevariante des Generators oder in einer horizontalen Ausrichtung bei einer horizontalen Montagevariante des Generators elektrisch und/oder elektronisch mit weiteren Komponenten des Drehgebers verbindbar ist.

Bei den weiteren Komponenten, mit denen die Spule elektrisch leitend verbindbar ist, handelt es sich insbesondere um eine Leiterplatte und/oder Platine und/oder eine Steuerung und/oder einer Auswerteeinheit. Das erste und das zweite Kontaktelement sind also so ausgebildet, dass unabhängig von der realisierten Montagevariante eine elektrische Kontaktierung mit der weiteren Komponente, insbesondere mit der Leiterplatte und/oder der Platine ermöglicht ist.

Die elektrische Verbindung zwischen der Spule und den weiteren Komponenten über das erste und das zweite Kontaktelement umfasst eine Energieübertragung, insbesondere die Übertragung einer Spannung und/oder eines Stroms und/oder eines Spannungsimpuls und/oder eines Stromimpuls. Weiterbildend kann diese auch eine analoge und/oder digitale Signalübertragung umfassen.

Das Federelement umfasst wenigstens bereichsweise ein magnetisch leitendes Material und/oder ist vollständig aus einem magnetisch leitenden Material ausgebildet. Bei diesem magnetisch leitenden Material kann es sich um ein ferromagnetisches Material, insbesondere einen weichmagnetischen Werkstoff, wie insbesondere Eisen und/oder Nickel und/oder Kobalt und/oder ein Ferrit oder mehrere Ferrite handeln.

Die vorliegende Erfindung ermöglicht vorteilhaft, dass der Generator entweder in einer horizontalen oder vertikalen Anordnung mit den weiteren Komponenten des Drehgebers elektrisch und/oder elektronisch verbindbar ist, um somit ein axiales oder radiales Zusammenwirken zwischen Generator und drehender Welle zwecks Spannungsinduktion zu ermöglichen.

Mit anderen Worten wird es durch die vorliegende Erfindung ermöglicht, dass der Generator in Abhängigkeit der geplanten Montagevariante entweder axial oder radial zur Welle anordenbar und/oder montierbar ist, um in der Spule eine Spannung und/oder einen Spannungsimpuls mittels des magnetisch leitenden Federelements in Reaktion auf ein sich zeitlich veränderndes Magnetfeld zu induzieren.

Der Trägerkörper ist bevorzugt im Wesentlichen aus einem Kunststoff ausgebildet. Besonders bevorzugt ist, wenn der Kunststoff nicht elektrisch leitend ist. Ganz besonders bevorzugt ist zudem, wenn der Trägerkörper als Spritzgussteil ausgebildet ist.

Das sich zeitlich veränderte magnetische Feld wird im Rahmen der vorliegenden Erfindung bevorzugt durch eine Vielzahl von Blockmagneten und/oder eine Vielzahl von Magnetsegmenten erzeugt, welche ausgebildet sind, relativ zu dem Generator eine Rotationsbewegung durchzuführen. In diesem Zusammenhang ist es bevorzugt, wenn die Vielzahl der Blockmagnete und/oder die Vielzahl der Magnetsegmente mit der drehenden Welle so in Wirkverbindung stehen, dass durch die Rotationsbewegung der drehenden Welle das sich zeitlich veränderte magnetische Feld derart erzeugbar ist, dass mittels des magnetisch leitenden Federelements die elektrische Spannung und/oder einen Spannungsimpuls in der Spule induzierbar ist.

Bevorzugt wird die induzierte Spannung und/oder der induzierte Spannungsimpuls zum Betreiben und/oder elektrischen Versorgen einer Auswerteelektronik des Drehgebers genutzt. Besonders bevorzugt wird die induzierte Spannung und/oder der induzierte Spannungsimpuls über das erste und das zweite Kontaktelement an die weitere Komponente, insbesondere eine Leiterplatte und/oder Platine, des Drehgebers übertragen.

Es wird nochmals darauf hingewiesen, dass der erfindungsgemäße Generator so ausgebildet ist, dass die elektrische Übertragung der induzierten Spannung und/oder des induzierten Spannungsimpuls auf die weitere Komponente, insbesondere eine Leiterplatte, über das erste und das zweite Kontaktelement sowohl in einer vertikalen Ausrichtung der Spule bei einer vertikalen Montagevariante des Generators als auch in einer horizontalen Ausrichtung der Spule bei einer horizontalen Montagevariante des Generators vorteilhaft möglich ist.

Gemäß einer Ausführungsform können das erste Kontaktelement und/oder das zweite Kontaktelement einen Vierkantdraht oder ein Stanzteil, insbesondere ein Stanzbiegeteil umfassen.

In einer Ausführungsform können das erste Kontaktelement und/oder das zweite Kontaktelement einen Spulenkontaktabschnitt, einen Mittelabschnitt und einen Hauptkontaktabschnitt umfassen, wobei der jeweilige Hauptkontaktabschnitt zwei Kontaktflächen umfasst, die im Wesentlichen plan mit einer ersten Außenseite und einer zweiten senkrecht dazu verlaufenden Außenseite des Trägerkörpers verlaufen.

Gemäß einer Ausführungsform kann sich der Spulenkontaktabschnitt des ersten Kontaktelements im Wesentlichen senkrecht zu dem Mittelabschnitt des ersten Kontaktelements erstrecken und/oder der Spulenkontaktabschnitt des zweiten Kontaktelements kann sich im Wesentlichen senkrecht zu dem Mittelabschnitt des zweiten Kontaktelements erstrecken.

In einer Ausführungsform kann der Trägerkörper ein erstes Trägerkörperteil und ein zweites Trägerkörperteil umfassen, wobei das erste Trägerkörperteil und/oder das zweite Trägerkörperteil ein Spritzgussteil sind.

Gemäß einer Ausführungsform kann der Trägerkörper eine Kontaktelementausnehmung umfassen, in welcher das erste Kontaktelement zumindest teilweise aufgenommen ist, und/oder der Trägerkörper kann eine Kontaktelementausnehmung umfassen, in welcher das zweite Kontaktelement zumindest teilweise aufgenommen ist.

In einer Ausführungsform umfasst das Federelement eine Blattfeder, wobei ein erstes Ende der Blattfeder durch den Trägerkörper fixiert ist und sich ein zweites freies Ende der Blattfeder in einer Kavität des Trägerkörpers hin- und herbewegen kann.

Gemäß einem weiteren Aspekt der Erfindung wird ein Drehgeber zum Erfassen von Informationen einer rotierenden, insbesondere rotierbaren, Welle bereitgestellt, wobei der Drehgeber einen Generator gemäß dem ersten Aspekt und eine Generatorträgerscheibe umfasst, wobei der Generator in einer vertikalen Anordnung auf der Generatorträgerscheibe befestigt ist, insbesondere elektrisch und/oder elektronisch mit der Generatorträgerscheibe verbunden ist.

Die Generatorträgerscheibe, die insbesondere die weitere Komponente ausbildet, ist bevorzugt als eine Leiterplatte und/oder Platine ausgebildet.

Die Generatorträgerscheibe ist bevorzugt fest und/oder statisch im Drehgeber verbaut, so dass die rotierbare Welle eine Relativbewegung, insbesondere eine Relativrotation, zur Generatorträgerscheibe in einem aktiven Betriebszustand der rotierenden Welle ausführt.

Gemäß einem weiteren Aspekt der Erfindung wird ein Drehgeber zum Erfassen von Informationen einer rotierenden, insbesondere rotierbaren, Welle bereitgestellt, wobei der Drehgeber einen Generator gemäß dem ersten Aspekt und eine Generatorträgerscheibe umfasst, wobei der Generator in einer horizontalen Anordnung auf der Generatorträgerscheibe befestigt ist, insbesondere elektrisch und/oder elektronisch mit der Generatorträgerscheibe verbunden ist.

Gemäß einer Ausführungsform umfasst der Drehgeber ferner eine Vielzahl von Blockmagneten und/oder eine Vielzahl von Magnetsegmenten, welche ausgebildet sind, relativ zu dem Generator eine Rotationsbewegung durchzuführen.

Die Vielzahl von Blockmagneten und/oder die Vielzahl von Magnetsegmenten ist bevorzugt starr mit der rotierbaren Welle verbunden, um in einem aktiven Betriebszustand der rotierenden Welle eine relative Rotationsbewegung zum Generator durchzuführen. Bevorzugt ist somit das sich zeitlich verändernde Magnetfeld erzeugbar, dass das Federelement so durchsetzt, dass die Hin- und Herbewegung zum Induzieren einer Induktionsspannung in der Spule erzeugbar ist.

Die Vielzahl der Blockmagneten und/oder die Vielzahl der Magnetsegmente steht bevorzugt mit der drehenden Welle in Wirkverbindung, um durch die Rotationsbewegung der drehenden Welle das sich zeitlich verändernde Magnetfeld derart zu erzeugen, dass mittels des Federelements der magnetische Spannungsimpuls in der Spule induzierbar ist.

Im Folgenden wird die Erfindung anhand von Ausführungsbeispielen und den Figuren näher beschrieben. In den Figuren zeigen:
- Fig. 1a: eine perspektivische Ansicht eines Generators gemäß einer Ausführungsform mit einem zweiteiligen Trägerkörper, einer Spule und zwei Kontaktelementen;
- Fig. 1b: eine perspektivische Ansicht eines Trägerkörperteils des zweiteiligen Trägerkörpers des Generators von Figur 1a;
- Fig. 1c: eine Explosionsdarstellung des Generators von Figur 1a;
- Fig. 1d,e: perspektivische Ansichten eines jeweiligen Kontaktelements eines Generators gemäß einer Ausführungsform;
- Fig. 2a: eine perspektivische Ansicht des Generators gemäß einer Ausführungsform in horizontaler Anordnung sowie eine Detailansicht des Kontaktbereichs des Generators;
- Fig. 2b: eine perspektivische Ansicht von Komponenten eines Drehgebers gemäß einer Ausführungsform mit einer Generatorträgerscheibe und dem auf der Generatorträgerscheibe in horizontaler Anordnung befestigten Generator von Figur 2a;
- Fig. 3a: eine perspektivische Ansicht des Generators gemäß einer Ausführungsform in vertikaler Anordnung sowie eine Detailansicht des Kontaktbereichs des Generators;
- Fig. 3b: eine perspektivische Ansicht von Komponenten eines Drehgebers gemäß einer Ausführungsform mit einer Generatorträgerscheibe und dem auf der Generatorträgerscheibe in vertikaler Anordnung befestigten Generator von Figur 3a;
- Fig. 4a,b: eine Seitenansicht und eine perspektivische Ansicht von Komponenten eines Drehgebers gemäß einer Ausführungsform mit einem Generator in vertikaler Anordnung und mehreren auf einer Magnetträgerscheibe befestigen Blockmagneten;
- Fig. 5a,b: eine Seitenansicht und eine perspektivische Ansicht von Komponenten eines Drehgebers gemäß einer Ausführungsform mit einem Generator in vertikaler Anordnung und mehreren auf einer Magnetträgerscheibe befestigen Magnetsegmenten;
- Fig. 6a,b: weitere perspektivische Ansichten von Komponenten eines Drehgebers gemäß einer Ausführungsform mit einem Generator in vertikaler Anordnung und
- Fig. 7a,b: eine Draufsicht und eine perspektivische Ansicht von Komponenten eines Drehgebers gemäß einer Ausführungsform mit einem Generator in horizontaler Anordnung.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist und dies unter die Definition der Ansprüche fällt.

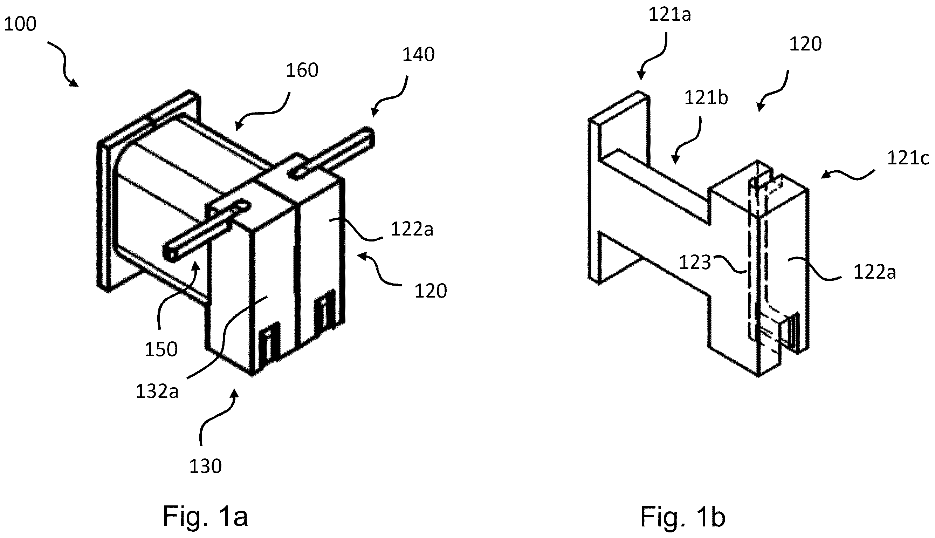

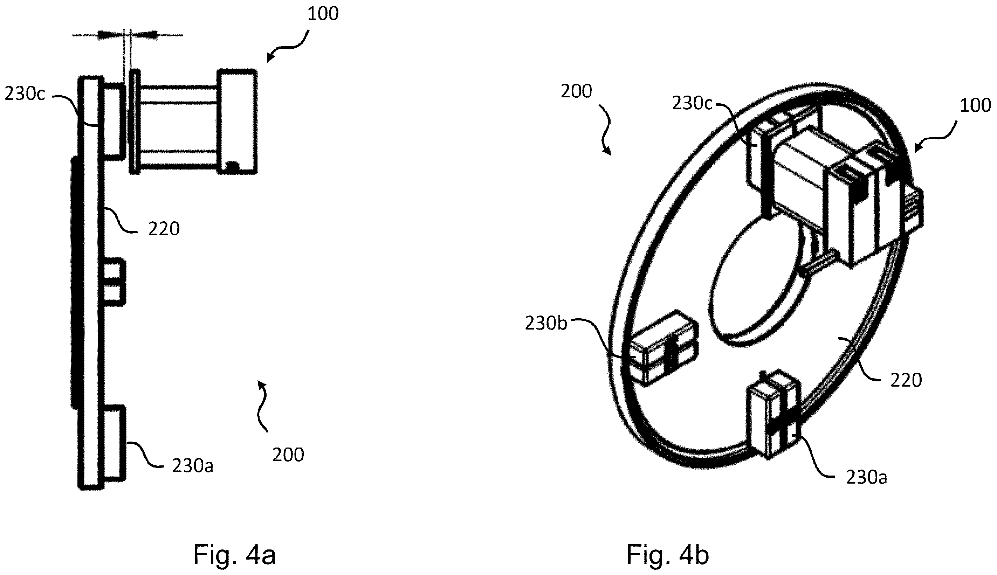

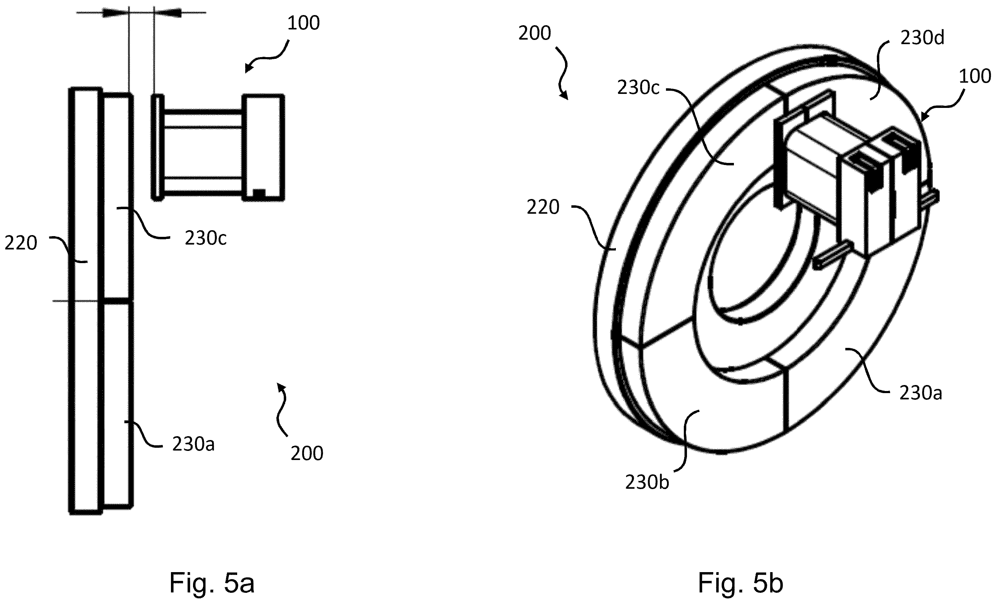

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln. Die Figur 1a zeigt eine perspektivische Ansicht eines Generators 100 gemäß einer Ausführungsform für einen Drehgeber. Ein Drehgeber 200 gemäß einer Ausführungsform mit dem Generator 100 gemäß einer Ausführungsform ist beispielsweise in den Figuren 4a,b und 5a,b dargestellt und wird nachstehend detaillierter beschrieben.

Bei der in Figur 1a dargestellten Ausführungsform umfasst der Generator 100 einen zweiteiligen Trägerkörper, der aus einem ersten Trägerkörperteil 120 und einem zweiten Trägerkörperteil 130 ausgebildet ist.

Die Figur 1b zeigt eine perspektivische Ansicht des ersten Trägerkörperteils 120 des zweiteiligen Trägerkörpers des Generators 100 von der Figur 1a (wobei der zweite Trägerkörperteil 130 spiegelsymmetrisch ausgebildet ist). Gemäß einer Ausführungsform können der erste und der zweite Trägerkörperteil 120, 130 im Wesentlichen aus einem Kunststoff bestehen, der elektrisch nicht leitend ist. In einer Ausführungsform können der erste und der zweite Trägerkörperteil 120, 130 mittels einem Spritzgussverfahren hergestellt werden.

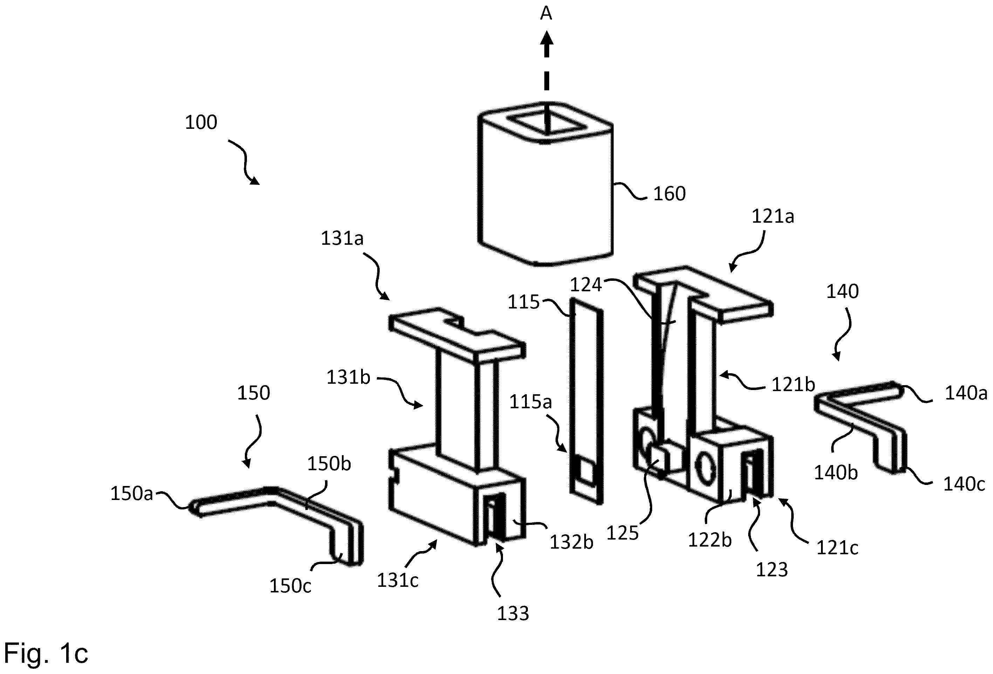

Wie sich dies der in Figur 1c gezeigten Explosionsdarstellung des Generators 100 von der Figur 1a entnehmen lässt, umfasst der Generator 100 ferner eine Spule 160 sowie ein erstes Kontaktelement 140 und ein zweites Kontaktelement 150. Wie sich dies aus einer Zusammenschau der Figuren 1a-c ergibt, ist die Spule 160 um mittlere Abschnitte 121b und 131b des ersten und zweiten Trägerkörperteils 120, 130 gewickelt. Wie in der Figur 1c dargestellt, definiert die Spule 160 eine Generatorachse bzw. Spulenachse A.

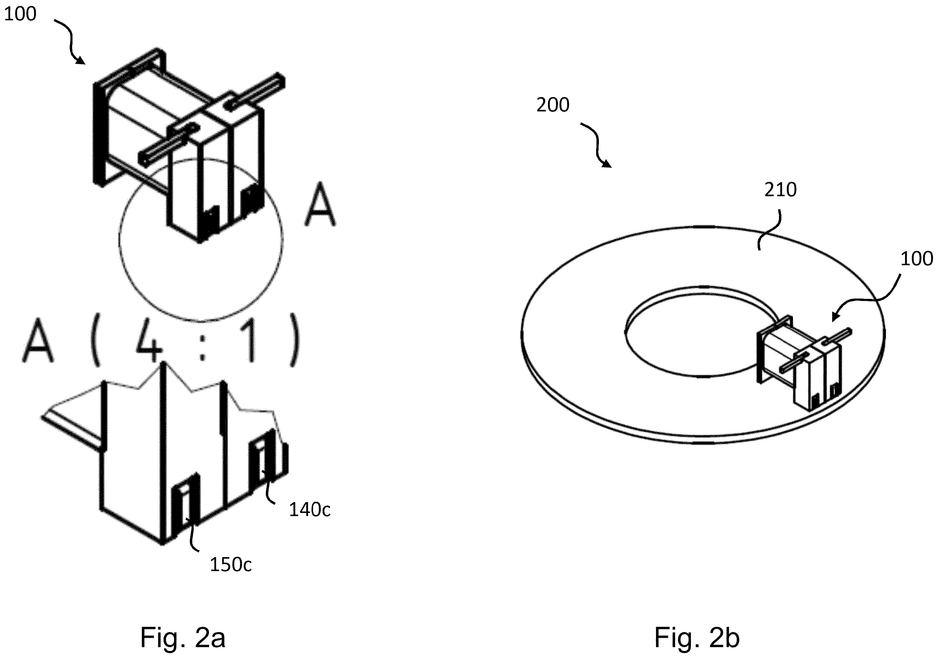

Der erste und zweite Trägerkörperteil 120, 130 umfassen ferner jeweils einen oberen Abschnitt 121a, 131a sowie jeweils einen unteren Kontaktabschnitt 121c, 131c. Wie sich dies beispielsweise der Figur 1c entnehmen lässt, können die oberen Abschnitte 121a, 131a, die mittleren Abschnitte 121b, 131b sowie die unteren Kontaktabschnitte 121c, 131c des ersten und zweiten Trägerkörperteils 120, 130 im Wesentlichen quaderförmig ausgebildet sein. Wie sich dies insbesondere den Figuren 1b und 2b entnehmen lässt, umfassen die unteren Kontaktabschnitte 121c, 131c des ersten und zweiten Trägerkörperteils 120, 130 eine jeweilige Ausnehmung 123, 133, in welcher das jeweilige Kontaktelement 140, 150 aufgenommen ist.

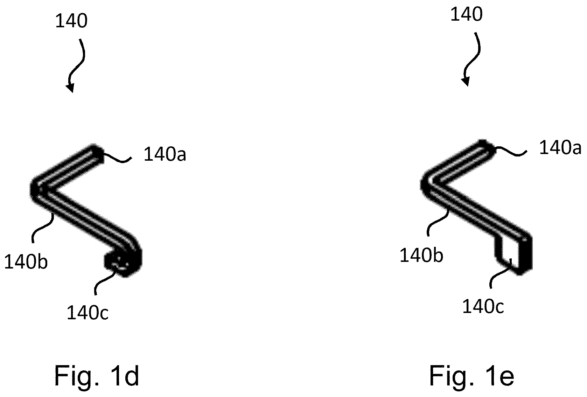

Die Figuren 1d und 1e zeigen perspektivische Ansichten von zwei möglichen Ausführungsformen des ersten und zweiten Kontaktelements 140, 150 (wobei exemplarisch nur das erste Kontaktelement 140 dargestellt ist). In der Ausführungsform von Figur 1d ist das erste Kontaktelement 140 als Vierkantdraht 140 ausgebildet. In der Ausführungsform von Figur 1e ist das erste Kontaktelement 140 als Stanzbiegeteil 140 ausgebildet (auch in Figur 1c dargestellt). In beiden Ausführungsformen umfassen das erste Kontaktelement 140 und das zweite Kontaktelement 150 jeweils einen Spulenkontaktabschnitt 140a, 150a, einen Mittelabschnitt 140b, 150b sowie einen Hauptkontaktabschnitt 140c, 150c. Die Spulenkontaktabschnitte 140a, 150a sind beispielsweise über einen jeweiligen Draht mit der Spule 160 verbunden und die Hauptkontaktabschnitte 140c, 150c dienen dazu, den Generator 100 elektrisch und/oder elektronisch, beispielsweise über eine Bus-Verbindung mit weiteren Komponenten des Drehgebers 200, beispielsweise einer Platine, einer Steuerung und/oder einer Auswerteeinheit zu verbinden, wie dies nachstehend detaillierter beschrieben wird.

Wenn das erste bzw. zweite Kontaktelement 140, 150 in der jeweiligen Ausnehmung 123, 133 der unteren Kontaktabschnitte 121c, 131c des ersten und zweiten Trägerkörperteils 120, 130 angeordnet ist, dann, wie sich dies einer Zusammenschau der Figuren 1a-c entnehmen lässt, erstreckt sich das jeweilige Kontaktelement 140, 150 von den Spulenkontaktabschnitten 140a, 150a über die Mittelabschnitte 140b, 150b durch den Trägerkörper zu den Hauptkontaktabschnitten 140c, 150c. Dabei können, wie in Figur 1a dargestellt, die Spulenkontaktabschnitte 140a, 150a in einem rechten Winkel zu den Mittelabschnitten 140b, 150b von einer Außenseite der Kontaktabschnitte 121c, 131c des jeweiligen Trägerkörperteils 120, 130 abstehen.

Wie dies insbesondere in den Figuren 1c-e dargestellt ist, umfasst der jeweilige Hauptkontaktabschnitt 140c, 150c des ersten und zweiten Kontaktelements 140, 150 eine erste Kontaktfläche und eine zweite Kontaktfläche, die in einem rechten Winkel zueinanderstehen. Wenn das erste bzw. zweite Kontaktelement 140, 150 in der jeweiligen Ausnehmung 123, 133 der unteren Kontaktabschnitte 121c, 131c des ersten und zweiten Trägerkörperteils 120, 130 angeordnet ist, dann, wie sich dies einer Zusammenschau der Figuren 1a-c entnehmen lässt, verlaufen die Kontaktflächen der Hauptkontaktabschnitte 140c, 150c des ersten und zweiten Kontaktelements 140, 150 im Wesentlichen plan mit einer ersten Außenseite und einer zweiten senkrecht dazu verlaufenden Außenseite des Trägerkörpers und/oder des jeweiligen Trägerkörperteils 120, 130.

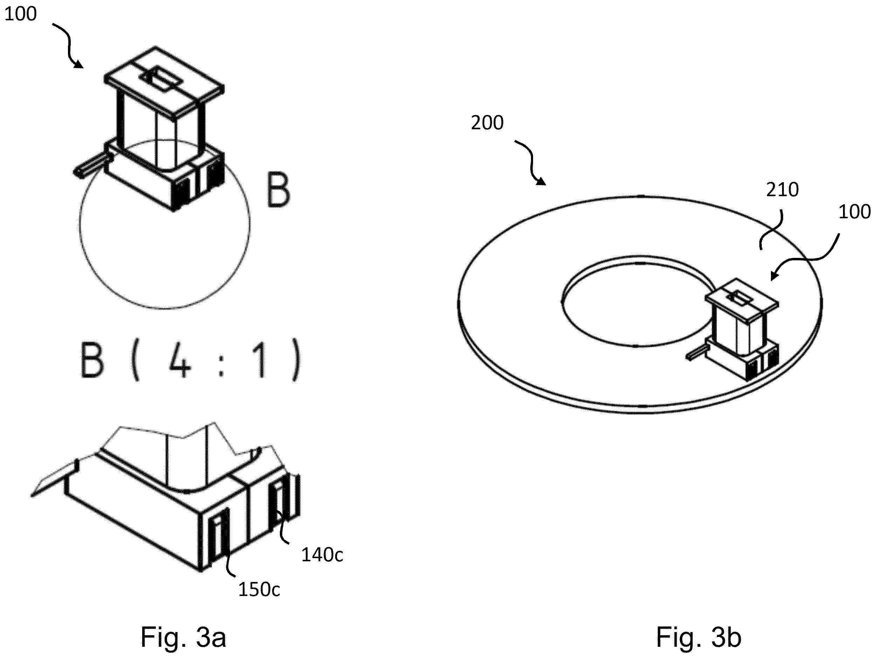

Wie bereits vorstehend beschrieben, dienen die senkrecht zu einer stehenden Kontaktflächen der Hauptkontaktabschnitte 140c, 150c des ersten und zweiten Kontaktelements 140, 150 dazu, den Generator 100 elektrisch und/oder elektronisch, beispielsweise über eine Bus-Verbindung mit weiteren Komponenten des Drehgebers 200, beispielsweise einer Platine, einer Steuerung und/oder einer Auswerteeinheit zu verbinden. Wie dies nachstehend unter weiterer Bezugnahme auf die Figuren 2a,b und 3a,b beschrieben wird, ermöglicht diese erfindungsgemäße Ausgestaltung ein Verbauen des Generators 100 in dem Drehgeber 200 sowohl in einer horizontalen (d.h. mit horizontal verlaufender Generatorachse A) als auch in einer vertikalen Anordnung (d.h. mit einer vertikal verlaufender Generatorachse A) des Generators 100.

Wie in Figur 1c dargestellt, umfasst der Generator 100 ferner ein magnetisch leitendes Federelement 115, insbesondere eine Blattfeder 115. Die Blattfeder 115 ist mittels eines Federelementbefestigungsloches 115a, in das ein Federelementbefestigungsstutzen 125 eingreift, an einem Ende durch die Kontaktabschnitte 121c, 131c des ersten und zweiten Trägerkörperteils 120, 130 fixiert. Das andere freie Ende der magnetisch leitenden Blattfeder 115 ist dazu ausgebildet, sich in einer Federelementkavität 124 zu bewegen, und zwar in Reaktion auf ein sich zeitlich änderndes Magnetfeld, wie dies nachstehend im Zusammenhang mit den Figuren 4a und 4b ausführlicher beschrieben wird. In einer Ausführungsform kann die Federelementkavität 124 zum freien Ende des Federelements 115 hin trompetenförmig ausgebildet sein.

Die Figur 2a zeigt eine perspektivische Ansicht des Generators 100 gemäß einer Ausführungsform in horizontaler Anordnung sowie eine Detailansicht des Kontaktbereichs des Generators 100 mit den Kontaktabschnitten 140c, 150c. Figur 2b zeigt eine perspektivische Ansicht von Komponenten des Drehgebers 200 gemäß einer Ausführungsform mit einer Generatorträgerscheibe 210 und dem auf der Generatorträgerscheibe 210 in horizontaler Anordnung befestigten Generator 100 von Figur 2a.

Die Figur 3a zeigt eine perspektivische Ansicht des Generators 100 gemäß einer Ausführungsform in vertikaler Anordnung sowie eine Detailansicht des Kontaktbereichs des Generators 100 mit den Kontaktabschnitten 140c, 150c. Figur 3b zeigt eine perspektivische Ansicht von Komponenten des Drehgebers 200 gemäß einer Ausführungsform mit der Generatorträgerscheibe 210 und dem auf der Generatorträgerscheibe 210 in vertikaler Anordnung befestigten Generator 100 von Figur 3a.

Die Figuren 4a und 4b zeigen eine Seitenansicht und eine perspektivische Ansicht von Komponenten des Drehgebers 200 gemäß einer Ausführungsform mit dem Generator 100 in vertikaler Anordnung und mehreren auf einer Magnetträgerscheibe 220 befestigen Blockmagneten 230a-c. Bei einer Rotation der Magnetträgerscheibe 220 und der darauf angeordneten Blockmagneten 230a-c relativ zu dem Generator 100 wird über einen Luftspalt aufgrund des sich zeitlich ändernden Magnetfelds das freie Ende des magnetisch leitenden Federelements 115 hin- und herbewegt. Aufgrund dieser Bewegung des freien Endes des magnetisch leitenden Federelements 115 innerhalb der Spule 160 wird ein Spannungsimpuls in der Spule 160 induziert, der über das erste und zweite Kontaktelement 140, 150 zum Betreiben und/oder elektrischen Versorgen einer Auswertungselektronik des Drehgebers 200 verwendet werden kann. Für weitere Details zu den physikalischen Mechanismen, die bei dem Zusammenwirken der Spule 160 mit dem Federelement 115 auftreten, wird hiermit auf die EP1687592 verwiesen. In dieser Hinsicht wird Bezug genommen auf die Anmeldung EP1687592, deren Inhalt hiermit in diese Anmeldung aufgenommen wird.

Die Figuren 5a und 5b zeigen eine Seitenansicht und eine perspektivische Ansicht von Komponenten des Drehgebers 200 gemäß einer Ausführungsform mit dem Generator 100 in vertikaler Anordnung und mehreren auf der Magnetträgerscheibe 220 befestigten Magnetsegmenten 230a-d. Bei einer Rotation der Magnetträgerscheibe 220 und der darauf angeordneten Magnetsegmente 230a-d relativ zu dem Generator 100 wird aufgrund des sich zeitlich ändernden Magnetfelds das freie Ende des Federelements 115 hin- und herbewegt, wodurch wiederum ein jeweiliger Spannungsimpuls in der Spule 160 induziert wird.

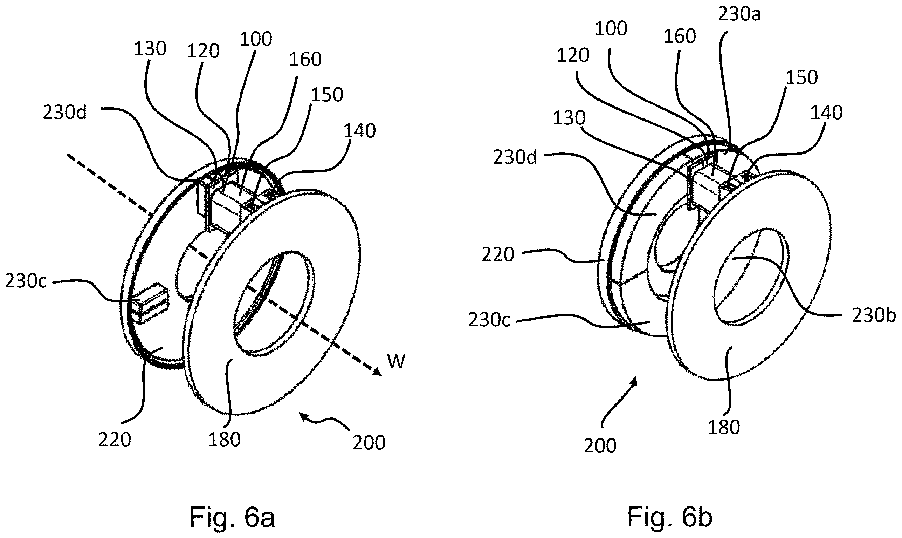

In der Figur 6a ist eine weitere perspektivische Ansicht der aus den Figuren 4a und 4b bekannten Komponenten des Drehgebers 200 gemäß der Ausführungsform mit der Spule 160 in der vertikalen Ausrichtung des Trägerkörpers 120, 130 zum Realisieren der vertikalen Montagevariante des Generators 100 gezeigt.

Das Ausführungsbeispiel der Fig. 6a unterscheidet sich zum Ausführungsbeispiel der Fig. 4a und 4b dadurch, dass zusätzlich die weitere Komponente dargestellt ist, die vorliegend durch eine ringförmige Platine 180 ausgebildet ist. Die Platine 180 ist über das erste Kontaktelement 140 und das zweite Kontaktelement 150 elektrisch mit der Spule 160 des Generators 100 verbunden.

Die ringförmige Platine 180 erstreckt sich in einem Bereich, der radial außen und umfangsseitig zur drehenden Welle verläuft. Ferner wird darauf hingewiesen, dass sich die Platine 180 in einer Ebene erstreckt, die quer zur Längserstreckung der nicht grafisch gezeigten rotierenden Welle verläuft und somit orthogonal zur Wellenachse W ausgerichtet ist. Die Platine 180 ist ferner parallel zur Magnetträgerscheibe 220 positioniert.

Die drehende Welle ist mechanisch mit der Magnetträgerscheibe 220 verbunden, um in Folge einer Rotationsbewegung der rotierbaren Welle um die Wellenachse W das sich zeitlich verändernde Magnetfeld zu erzeugen.

Die Platine 180 ist im Gegensatz zur Magnetträgerscheibe 220 nicht mit der rotierbaren und/oder drehbaren Welle mechanisch verbunden. Das sich zeitlich verändernde Magnetfeld wird somit durch eine relative Rotation und/oder Relativbewegung zwischen dem Generator 100 einerseits und der Magnetträgerscheibe 220 und der rotierbaren Welle andererseits erzeugt.

In der Figur 6b ist eine weitere perspektivische Ansicht der aus den Figuren 5a und 5b bekannten Komponenten des Drehgebers 200 gemäß der Ausführungsform mit der Spule 160 in der vertikalen Ausrichtung des Trägerkörpers 120, 130 zum Realisieren der vertikalen Montagevariante des Generators 100 gezeigt. Die Fig. 6b ist entsprechend zur Fig. 6a zu verstehen, weshalb zum Vermeiden von Wiederholungen auf die vorherige Beschreibung verwiesen wird.

Schließich wird noch darauf hingewiesen, dass das Ausführungsbeispiel gemäß der Figuren 6a und 6b eine vertikale Montagevariante des Generators 100 zeigt, in dem der erfindungsgemäße Generator 100 axial mit der rotierbaren Welle zwecks Spannungsinduktion zusammenwirken kann.

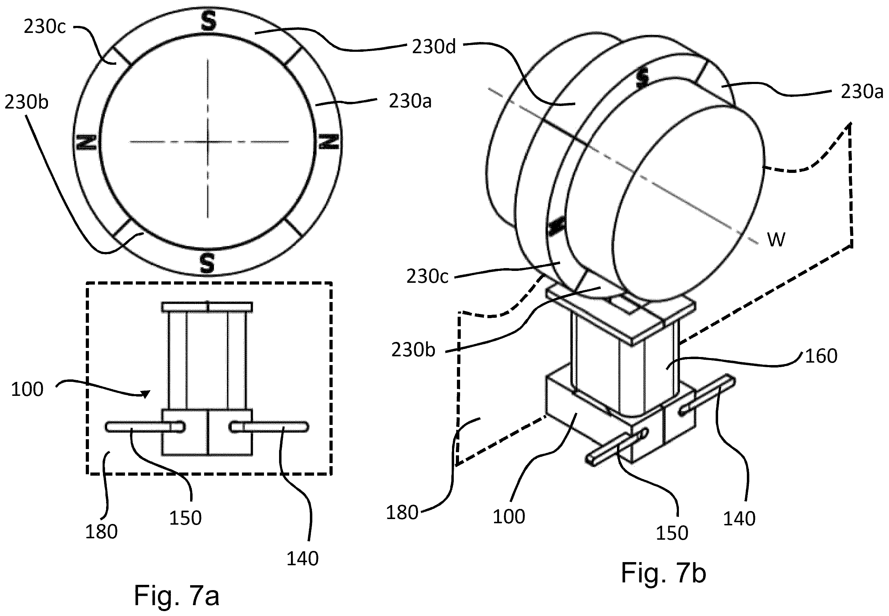

Derselbe Generator 100 kann erfindungsgemäß auch bei einer horizontalen Montagevariante mit mehreren Magnetsegmenten 230a-d einer Magnetträgerscheibe 220 zusammenwirken, die an der drehenden Welle mantelseitig und/oder umfangsseitig angeordnet sind. Somit kann der erfindungsgemäße Generator 100 auch radial zur um die Wellenachse W rotierbaren Welle angeordnet sein, was in den Figuren 7a und 7b gezeigt ist.

In den Fig. 7a und 7b ist eine Draufsicht und eine perspektivische Ansicht der Komponenten des Drehgebers 200 gemäß einer weiteren Ausführungsform gezeigt. Über das nicht grafisch dargestellte Ende des ersten und zweiten Kontaktelements 140, 150 ist die Spule 160 mit einer nur bereichsweise dargestellten Platine 180 als weitere Komponente elektrisch verbunden.

Die nur bereichsweise dargestellte Platine 180, die entsprechend den Figuren 6a und 6b bevorzugt ringförmig ausgebildet ist, erstreckt sich wiederum in einem Bereich, der radial außen und umfangsseitig zur drehenden Welle verläuft und somit dieselbe Position relativ zur drehenden Welle einnimmt, wie in den Ausführungsbeispielen gemäß den Figuren 6a und 6b. Ferner umfasst die rotierbare Welle mantelseitig Magnetsegmente 230a-d, die in Umfangsrichtung geschlossen sind und somit ein Ringelement ausbilden.

Im Ergebnis wird es durch die vorliegende Erfindung auf überraschend einfache Art ermöglicht, dass der erfindungsgemäße Generator 100 in einer vertikalen Montagevariante axial zur rotierbaren Welle oder in einer horizontalen Montagevariante relativ zur rotierbaren Welle auf der Generatorträgerscheibe 210 oder der Platine 180 anordenbar ist.

## Patentansprüche

1. Drehgeber (200) zum Erfassen von Informationen einer rotierenden Welle,
wobei der Drehgeber (200) einen Generator (100) und eine Generatorträgerscheibe (210) umfasst,
wobei der Generator (100)
in einer vertikalen Montagevariante, in der der Generator eine vertikal verlaufende Generatorachse (A) umfasst und axial mit der rotierbaren Welle zusammenwirkt oder
in einer horizontalen Montagevariante, in der der Generator eine horizontal verlaufende Generatorachse (A) umfasst und radial zur rotierbaren Welle angeordnet ist, auf der
Generatorträgerscheibe (210) befestigt ist und wobei der Generator (100) umfasst:
einen Trägerkörper (120, 130);
eine Spule (160), die um einen Abschnitt (121b, 131b) des Trägerkörpers (120, 130) gewickelt ist;
ein Federelement (115), welches ausgebildet ist, in Reaktion auf ein sich zeitlich veränderndes Magnetfeld eine Hin- und Herbewegung durchzuführen und eine Spannung in der Spule (160) zu induzieren; und
ein erstes Kontaktelement (140) und ein zweites Kontaktelement (150), welche ausgebildet und angeordnet sind, die Spule (160) entweder in einer vertikalen Ausrichtung des Trägerkörpers (120, 130) gemäß der vertikalen Montagevariante des Generators (100) oder in einer horizontalen Ausrichtung des Trägerkörpers (120, 130) gemäß der horizontalen Montagevariante des Generators (100) elektrisch mit weiteren Komponenten des Drehgebers (200) zu verbinden, um den Generator (100) entweder axial oder radial zu der rotierbaren Welle zu positionieren.

2. Drehgeber (200) nach Anspruch 1, wobei das erste Kontaktelement (140) und/oder das zweite Kontaktelement (150) einen Vierkantdraht oder ein Stanzteil, insbesondere ein Stanzbiegeteil umfasst.

3. Drehgeber (200) nach Anspruch 1 oder 2, wobei das erste Kontaktelement (140) und/oder das zweite Kontaktelement (150) einen Spulenkontaktabschnitt (140a, 150a), einen Mittelabschnitt (140b, 150b) und einen Hauptkontaktabschnitt (140c, 150c) umfassen, wobei der jeweilige Hauptkontaktabschnitt (140c, 150c) zwei Kontaktflächen umfasst, die im Wesentlichen plan mit einer ersten Außenseite und einer zweiten senkrecht dazu verlaufenden Außenseite des Trägerkörpers (120, 130) verlaufen.

4. Drehgeber (200) nach Anspruch 3, wobei sich der Spulenkontaktabschnitt (140a) des ersten Kontaktelements (140) im Wesentlichen senkrecht zu dem Mittelabschnitt (140b) des ersten Kontaktelements (140) erstreckt und/oder wobei sich der Spulenkontaktabschnitt (150a) des zweiten Kontaktelements (150) im Wesentlichen senkrecht zu dem Mittelabschnitt (150b) des zweiten Kontaktelements (150) erstreckt.

5. Drehgeber (200) nach einem der vorhergehenden Ansprüche, wobei der Trägerkörper (120, 130) ein erstes Trägerkörperteil (120) und ein zweites Trägerkörperteil (130) umfasst, wobei das erste Trägerkörperteil (120) und/oder das zweite Trägerkörperteil (130) ein Spritzgussteil sind.

6. Drehgeber (200) nach einem der vorhergehenden Ansprüche, wobei der Trägerkörper (120) eine Kontaktelementausnehmung (123) umfasst, in welcher das erste Kontaktelement (140) zumindest teilweise aufgenommen ist, und/oder wobei der Trägerkörper (130) eine Kontaktelementausnehmung (133) umfasst, in welcher das zweite Kontaktelement (150) zumindest teilweise aufgenommen ist.

7. Drehgeber (200) nach einem der vorhergehenden Ansprüche, wobei das Federelement (115) eine Blattfeder (115) umfasst, wobei ein erstes Ende der Blattfeder (115) durch den Trägerkörper (120, 130) fixiert ist und sich ein zweites freies Ende der Blattfeder (115) in einer Kavität (124) des Trägerkörpers (120, 130) hin- und herbewegen kann.

8. Drehgeber (200) nach einem der vorgenannten Ansprüche, wobei der Drehgeber (200) ferner eine Vielzahl von Blockmagneten (203a-c) und/oder eine Vielzahl von Magnetsegmenten (203a-d) umfasst, welche ausgebildet sind, relativ zu dem Generator (100) eine Rotationsbewegung durchzuführen.

## Claims

1. Rotary encoder (200) for acquiring information from a rotating shaft,
wherein the rotary encoder (200) comprises a generator (100) and a generator carrier disk (210),
wherein the generator (100) is fastened on the generator carrier disk (210) in a vertical mounting variant, in which the generator comprises a vertically extending generator axis (A) and interacts axially with the rotatable shaft, or in a horizontal mounting variant, in which the generator comprises a horizontally extending generator axis (A) and is arranged radially to the rotatable shaft, and wherein the generator (100) comprises:
a carrier body (120, 130);
a coil (160) which is wound around a portion (121b, 131b) of the carrier body (120, 130);
a spring element (115) which is designed to carry out a reciprocating movement in response to a temporally changing magnetic field and to induce a voltage in the coil (160); and
a first contact element (140) and a second contact element (150) which are designed and arranged to electrically connect the coil (160) to other components of the rotary encoder (200) either in a vertical orientation of the carrier body (120, 130), in accordance with the vertical mounting variant of the generator (100), or in a horizontal orientation of the carrier body (120, 130), in accordance with the horizontal mounting variant of the generator (100), in order to position the generator (100) either axially or radially with respect to the rotatable shaft.

2. Rotary encoder (200) according to claim 1, wherein the first contact element (140) and/or the second contact element (150) comprises a square wire or a stamped part, in particular a stamped and bent part.

3. Rotary encoder (200) according to claim 1 or 2, wherein the first contact element (140) and/or the second contact element (150) comprise a coil contact portion (140a, 150a), a central portion (140b, 150b) and a main contact portion (140c, 150c), wherein the relevant main contact portion (140c, 150c) comprises two contact surfaces which extend in a substantially planar manner with respect to a first outer face and a second outer face of the carrier body (120, 130) extending in a perpendicular manner thereto.

4. Rotary encoder (200) according to claim 3, wherein the coil contact portion (140a) of the first contact element (140) extends substantially perpendicular with respect to the central portion (140b) of the first contact element (140) and/or wherein the coil contact portion (150a) of the second contact element (150) extends substantially perpendicular with respect to the central portion (150b) of the second contact element (150).

5. Rotary encoder (200) according to any of the preceding claims, wherein the carrier body (120, 130) comprises a first carrier body part (120) and a second carrier body part (130), wherein the first carrier body part (120) and/or the second carrier body part (130) are an injection molded part.

6. Rotary encoder (200) according to any of the preceding claims, wherein the carrier body (120) comprises a contact element recess (123) in which the first contact element (140) is at least partially received, and/or wherein the carrier body (130) comprises a contact element recess (133) in which the second contact element (150) is at least partially received.

7. Rotary encoder (200) according to any of the preceding claims, wherein the spring element (115) comprises a leaf spring (115), wherein a first end of the leaf spring (115) is fixed by the support body (120, 130) and a second free end of the leaf spring (115) can perform a reciprocating movement in a cavity (124) of the carrier body (120, 130).

8. Rotary encoder (200) according to any of the preceding claims, wherein the rotary encoder (200) further comprises a plurality of block magnets (203a-c) and/or a plurality of magnet segments (203a-d) which are designed to perform a rotational movement relative to the generator (100).

## Revendications

1. Encodeur rotatif (200) pour la saisie d'informations d'un arbre rotatif,
dans lequel l'encodeur rotatif (200) comprend un générateur (100) et un disque formant support pour générateur (210),
dans lequel le générateur (100) est fixé sur le disque formant support pour générateur (210) dans une variante de montage verticale, dans laquelle le générateur comprend un axe de générateur (A) s'étendant verticalement et coopère axialement avec l'arbre pouvant tourner, ou dans une variante de montage horizontale, dans laquelle le générateur comprend un axe de générateur (A) s'étendant horizontalement et est disposé radialement par rapport à l'arbre pouvant tourner, et dans lequel le générateur (100) comprend :
un corps formant support (120, 130) ;
une bobine (160) enroulée autour d'une section (121b, 131b) du corps formant support (120, 130) ;
un élément à ressort (115) conçu pour effectuer un mouvement de va-et-vient en réponse à un champ magnétique variant dans le temps et pour induire une tension dans la bobine (160) ; et
un premier élément formant contact (140) et un second élément formant contact (150) conçus et disposés de manière à connecter électriquement la bobine (160) à d'autres composants de l'encodeur rotatif (200), soit dans une orientation verticale du corps formant support (120, 130) selon la variante de montage verticale du générateur (100), soit dans une orientation horizontale du corps formant support (120, 130) selon la variante de montage horizontale du générateur (100), afin de positionner le générateur (100) soit axialement soit radialement par rapport à l'arbre pouvant tourner.

2. Encodeur rotatif (200) selon la revendication 1, dans lequel le premier élément formant contact (140) et/ou le second élément formant contact (150) comprennent un fil carré ou une pièce découpée, en particulier une pièce découpée et pliée.

3. Encodeur rotatif (200) selon la revendication 1 ou 2, dans lequel le premier élément formant contact (140) et/ou le second élément formant contact (150) comprennent une section de contact de bobine (140a, 150a), une section centrale (140b, 150b) et une section de contact principale (140c, 150c), dans lequel la section de contact principale (140c, 150c) respective comprend deux surfaces de contact qui s'étendent sensiblement de manière plane, avec un premier côté extérieur et un second côté extérieur s'étendant perpendiculairement à celui-ci, du corps formant support (120, 130).

4. Encodeur rotatif (200) selon la revendication 3, dans lequel la section de contact de bobine (140a) du premier élément formant contact (140) s'étend sensiblement perpendiculairement à la section centrale (140b) du premier élément formant contact (140) et/ou dans lequel la section de contact de bobine (150a) du second élément formant contact (150) s'étend sensiblement perpendiculairement à la section centrale (150b) du second élément formant contact (150).

5. Encodeur rotatif (200) selon l'une des revendications précédentes, dans lequel le corps formant support (120, 130) comprend une première partie de corps formant support (120) et une seconde partie de corps formant support (130), dans lequel la première partie de corps formant support (120) et/ou la seconde partie de corps formant support (130) sont une pièce moulée par injection.

6. Encodeur rotatif (200) selon l'une des revendications précédentes, dans lequel le corps formant support (120) comprend un évidement pour élément formant contact (123) dans lequel le premier élément formant contact (140) est au moins partiellement reçu, et/ou dans lequel le corps formant support (130) comprend un évidement pour élément formant contact (133) dans lequel le second élément formant contact (150) est au moins partiellement reçu.

7. Encodeur rotatif (200) selon l'une des revendications précédentes, dans lequel l'élément à ressort (115) comprend un ressort à lame (115), dans lequel une première extrémité du ressort à lame (115) est fixée par le corps formant support (120, 130) et une seconde extrémité libre du ressort à lame (115) peut se déplacer en va-et-vient dans une cavité (124) du corps formant support (120, 130).

8. Encodeur rotatif (200) selon l'une des revendications précédentes, dans lequel l'encodeur rotatif (200) comprend en outre une pluralité d'aimants en bloc (203a-c) et/ou une pluralité de segments d'aimants (203a-d) conçus pour effectuer un mouvement de rotation par rapport au générateur (100).
